# EUROPEAN PATENT APPLICATION

(11) **EP 1 868 381 A1**
(43) Date of publication of application: **19.12.2007**
(21) Application number: 06715551.5
(22) Date of filing: 10.03.2006
(51) Int. Cl.: H04N 5/76, G11B 20/10, G11B 27/00, H04N 5/91

(54) **CONTENT DATA RECORDING DEVICE AND CONTENT DATA RECORDING METHOD**

(30) Priority: 11.03.2005 JP 2005069920
(71) Applicant: Pioneer Corporation, Tokyo 153-8654 (JP)
(72) Inventor: OHISHI, Tomoya, inishi 4-chome, Ohta-ku, Tokyo, 1438564 (JP); YASHIRO, Kenji, inishi 4-chome, Ohta-ku, Tokyo, 1438564 (JP); TAHARA, Kazushi, inishi 4-chome, Ohta-ku, Tokyo, 1438564 (JP); KIKUCHI, Fumiaki, inishi 4-chome, Ohta-ku, Tokyo, 1438564 (JP); TAIMA, Toru, inishi 4-chome, Ohta-ku, Tokyo, 1438564 (JP); NAKAI, Toshiki, inishi 4-chome, Ohta-ku, Tokyo, 1438564 (JP)
(74) Representative: Viering, Jentschura & Partner
(86) International application number: PCT/JP2006/304781
(87) International publication number: WO 2006/095867

(57) **Abstract**

While power of a recording device is ON, a CPU (116) records a predetermined amount of content data received, in a continuous recording RAM (114) while updating. When a user presses a recording start button, the CPU records the received content data on a hard disc drive (115). After recording of the content data onto the hard disc is started, the CPU temporarily stops recording of the content data onto the continuous recording RAM and transfers the content data recorded on the continuous recording RAM to the hard disc drive. After recording of the content data onto the hard disc drive is completed, the CPU connects the content data recorded directly on the hard disc with the content data transferred from the continuous recording RAM.

## Description

### Technical Field

The present invention relates to a recording apparatus for and a recording method of recording content data, which is transmitted from e.g. a television broadcast station or the like, onto a recording medium.

### Background Art

A recording apparatus for receiving analog or digital content data, which is transmitted from e.g. a television broadcast station or the like, and recording it onto a recording medium such as a hard disk and an optical disc has been widely spread, as e.g. a video recorder, a hard disk recorder, a DVD recorder, and the like.

An old type of recording apparatus starts to record the content data when a user presses a recording-start button to input a recording-start command. As a result, the content data, which is received after the recording-start button is pressed, is recorded on the recording medium. Thus, for example, when a program is recorded from its start (or head), the user needs to press the recording-start button at a program start time point.

In some cases, however, the user forgets to press the recording-start button at the program start time point, remembers that a little after the program is started, and then presses the recording-start button. In such a case, according to the old type of recording apparatus, the content data cannot be left (or stored) on the recording medium between the program start time point and when the user presses the recording-start button. This is inconvenient.

Some new type of recording apparatus, which is currently spread, aims at solving the inconvenience. This new type of recording apparatus always receives one channel or a plurality of channels of content data, which is transmitted from a television broadcast station or the like, and keeps recording it onto a hard disk. The user specifies a necessary portion of the content data which is recorded on the hard disk, and inputs a command to save the portion (or to leave it without deletion). According to the new type of recording apparatus, even if the user forgets to press the recording-start button at the program start time point before the program is started, if the user specifies the content data corresponding to a program start portion out of the content data which is recorded on the hard disk, and inputs a command to save this, then the content data corresponding to the program start portion can be left (or stored) on the recording medium.

### Disclosure of Invention

### Subject to be Solved by the Invention

However, according to the aforementioned new type of recording apparatus, the following several problems can occur.

Firstly, the new type of recording apparatus always keeps recording the content data onto the hard disk while the recording apparatus is powered on. Since the content data is data including video images, it has a large data size. Thus, the new type of recording apparatus is provided with a large-capacity hard disk. Some of the new type of recording apparatus is provided with a plurality of hard disks with a capacity of several hundred Giga Bytes. This results in a large-scaled apparatus, such as the number of hard disks is increased and a cooling mechanism becomes massive. The large-scaled apparatus may cause problems such as increasing an apparatus size, increasing its weight, and increasing the cost.

Secondly, the new type of recording apparatus always keeps recording the content data onto the hard disk while the recording apparatus is powered on. During the recording onto the hard disk, a motor for rotating the hard disk is kept driven. Therefore, the motor is always driven while the recording apparatus is powered on. Thus, it has a problem of high power consumption.

Thirdly, the new type of recording apparatus always keeps recording the content data onto the hard disk while the recording apparatus is powered on. Thus, it has a problem of an increase in the prospect of the failure of a moving part of the hard disk drive, e.g. a hard disk or a head.

In view of the problems exemplified above, it is therefore a first object of the present invention to provide a recording apparatus and a recording method which can reduce the apparatus scale while the content data which is received before the recording-start command is inputted is recorded and held.

It is a second object of the present invention to provide a recording apparatus and a recording method which can reduce the power consumption while the content data which is received before the recording-start command is inputted is recorded and held.

It is a third object of the present invention to provide a recording apparatus and a recording method which can reduce the prospect of the failure while the content data which is received before the recording-start command is inputted is recorded and held.

### Means for Solving the Subject

The above object of the present invention can be achieved by a recording apparatus provided with: a content data receiving device for receiving content data; a command receiving device for receiving a main-recording start command; a first recording device; a second recording device which is separated from and independent of the first recording device; a constant recording control device for keeping recording, while updating, a predetermined amount of content data which is received by the content data receiving device before the main-recording start command is received by the command receiving device, onto the first recording device; an operation control device for keeping the second recording device out-of-operation before the main-recording start command is received by the command receiving device and for starting an operation of the second recording device after the main-recording start command is received by the command receiving device; a main recording control device for recording the content data which is received by the content data receiving device, onto the second recording device after the operation of the second recording device is started by the operation control device; and a combining device for mutually combining the content data which is recorded and held on the first recording device at a time point at which the content data received by the content data receiving device starts to be recorded onto the second recording device or immediately before the time point, and the content data which is recorded on the second recording device.

The above object of the present invention can be also achieved by a recording system provided with: a first recording apparatus; and a second recording apparatus, which are connected to each other through a network, the first recording apparatus provided with: a first content data receiving device for receiving content data from an external transmission source; a first command receiving device for receiving a main-recording start command; a command transmitting device for transmitting the main-recording start command, which is received by the first command receiving device, to the second recording apparatus; a first recording device; a constant recording control device for keeping recording, while updating, a predetermined amount of content data which is received by the first content data receiving device before the main-recording start command is received by the first command receiving device, onto the first recording device; a notice receiving device for receiving a main-recording start notice; and a content data transmitting device for transmitting the content data which is recorded and held on the first recording device at a time point at which the main-recording start notice is received by the notice receiving device, to the second recording apparatus, the second recording apparatus provided with: a second content data receiving device for receiving content data from an external transmission source; a second command receiving device for receiving a main-recording start command; a second recording device; an operation control device for keeping the second recording device out-of-operation before the main-recording start command is received by the second command receiving device and for starting an operation of the second recording device after the main-recording start command is received by the second command receiving device; a main recording control device for recording the content data which is received by the second content data receiving device, onto the second recording device after the operation of the second recording device is started by the operation control device; a notice transmitting device for transmitting the main-recording start notice to the first recording apparatus when the content data which is received by the second content data receiving device starts to be recorded onto the second recording device; a third content data receiving device for receiving the content data which is transmitted from the content data transmitting device; and a combining device for mutually combining the content data which is received by the third content data receiving device and the content data which is recorded on the second recording device.

The above object of the present invention can be also achieved by a content-data recording method on a recording apparatus provided with: a content data receiving device for receiving content data; a first recording device; and a second recording device, the recording method provided with: a constant recording process of keeping recording, while updating, a predetermined amount of content data which is received by the content data receiving device before a main-recording start command is received, onto the first recording device; a command receiving process of receiving the main-recording start command; an operating process of starting an operation of the second recording device after the main-recording start command is received in the command receiving process; a main recording process of recording the content data which is received by the content data receiving device, onto the second recording device after the operation of the second recording device is started in the operating process; and a combining process of mutually combining the content data which is recorded and held on the first recording device at a time point at which the content data received by the content data receiving device starts to be recorded onto the second recording device or immediately before the time point, and the content data which is recorded on the second recording device.

The above object of the present invention can be also achieved by a computer program making a computer function as the recording apparatus of the present invention (including its various aspects).

The above object of the present invention can be also achieved by a computer program product in a computer-readable medium for tangibly embodying a program of instructions executable by a computer, the computer program product making the computer function as the recording apparatus of the present invention (including its various aspects).

According to the computer program product of the present invention, the aforementioned recording apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communicating device. More specifically, the computer program product may include computer readable codes to cause the computer (or may comprise computer readable instructions for causing the computer) to function as the aforementioned recording apparatus of the present invention.

These effects and other advantages of the present invention will become more apparent from the embodiments and example explained below.

### Brief Description of Drawings

[FIG. 1] FIG. 1 is a block diagram showing a first embodiment of the recording apparatus of the present invention.
[FIG. 2] FIG. 2 is an explanatory diagram showing the operation of the recording apparatus shown in FIG. 1.
[FIG. 3] FIG. 3 is an explanatory diagram showing a combining process of the recording apparatus shown in FIG. 1.
[FIG. 4] FIG. 4 is a block diagram showing a modified example of a combining device.
[FIG. 5] FIG. 5 is a block diagram showing another modified example of the combining device.
[FIG. 6] FIG. 6 is a block diagram showing a second embodiment of the recording apparatus of the present invention.
[FIG. 7] FIG. 7 is a block diagram showing an embodiment of the recording system of the present invention.
[FIG. 8] FIG. 8 is a block diagram showing an example of the recording apparatus of the present invention.

### Description of Reference Codes

1, 2, 100 recording apparatus
5 recording system
11, 61, 63 content data receiving device
12 command receiving device
13 first recording device
14 second recording device
15 constant recording control device
16 operation control device
17 main recording control device
18, 41, 45 combining device

### Best Mode for Carrying Out the Invention

Hereinafter, the best mode for carrying out the present invention will be explained in each embodiment in order with reference to the drawings.

### (First Embodiment of Recording Apparatus)

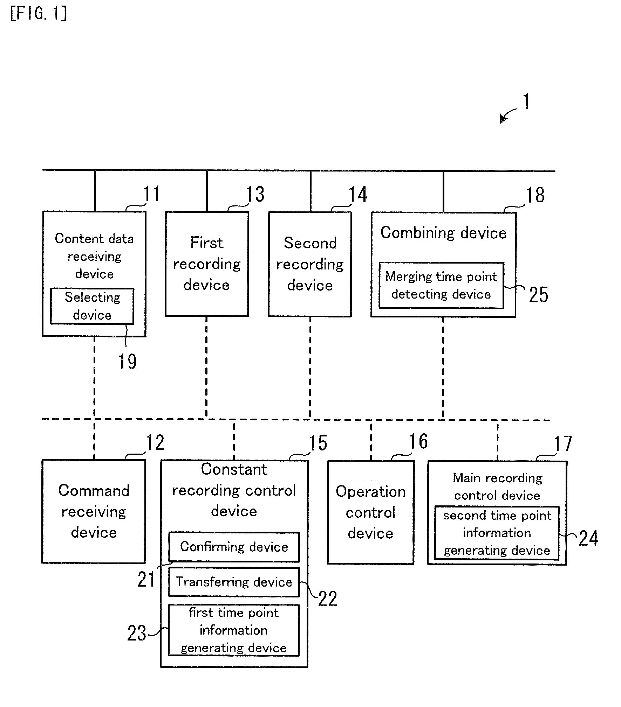

FIG. 1 shows a first embodiment of the recording apparatus of the present invention. In FIG. 1, a recording apparatus 1 is an apparatus for receiving content data which is transmitted from a transmission source, such as a television broadcast station, and recording it onto a recording medium. The recording apparatus 1 is provided with a function of recording the content data which is transmitted from the transmission source, onto the recording medium when a user presses e.g. a recording-start button, in response to the press. Hereinafter, such a recording process or recording operation is referred to as "main recording". Moreover, the recording apparatus 1 is also provided with a function of always receiving the content data which is transmitted from the transmission source and always recording it onto a memory element or recording medium, before the user presses the recording-start button while the recording apparatus 1 is powered on. Hereinafter, such a recording process or recording operation is referred to as "constant recording".

The recording apparatus 1 is, for example, a tuner and hard disk drive built-in type recorder. Incidentally, the recording apparatus 1 may not be provided with a tuner. In this case, a tuner is prepared aside from the recording apparatus 1, and an output terminal of the tuner is connected to an input terminal of the recording apparatus 1. Moreover, instead of a hard disk drive, the recording apparatus may be provided with another recording medium, such as an optical disc. Moreover, the recording apparatus 1 may be unified with a television. Moreover, the recording apparatus 1 may be built in a personal computer.

The content data is about a program which is transmitted from a television broadcast station or the like, and it is video data and audio data. Specifically, in case of terrestrial digital broadcasting, the content data is MPEG-2TS (Moving Picture Experts Group phase 2 Transport Stream) video data and audio data. Incidentally, the transmission source of the content data is not limited to a television broadcast station. Moreover, the content data may be document data, numerical data, or the like.

As shown in FIG. 1, the recording apparatus 1 is provided with: a content data receiving device 11; a command receiving device 12; a first recording device 13; a second recording device 14; a constant recording control device 15; an operation control device 16; a main recording control device 17; and a combining device 18.

The content data receiving device 11 receives the content data which is transmitted from the transmission source. The content data receiving device 11 can always receive the content data while the recording apparatus 1 is powered on. If the transmission source is a television broadcast station, the content data receiving device 11 is desirably a communication interface for communicating with the television broadcast station through a transmission channel, such as a ground wave, a satellite wave, and a cable. On the other hand, if the transmission source is not a television broadcast station, for example, if a tuner, which is different from the recording apparatus 1, receives the content data which is transmitted from a television broadcast and the tuner supplies it to the recording apparatus 1, the content data receiving device 11 is desirably a communication interface for communicating with the tuner.

The content data receiving device 11 may be provided with a selecting device 19. The selecting device 19 selects the content data about one program (more precisely, a series of program which is provided from one television broadcast company), from among the content data about a plurality of programs which are transmitted on a plurality of channels or which are multiplexed into one channel and simultaneously transmitted from the television broadcast station. The selecting device 19 is, for example, a tuner. Moreover, like BS (Broadcasting Satellite) digital broadcasting and terrestrial digital broadcasting, if the content data about a plurality of programs is multiplexed into one channel, the selecting device 19 is desirably a tuner and a demultiplexer. Incidentally, as described above, if the tuner is prepared aside from the recording apparatus 1, the selecting device 19 is unnecessary.

The command receiving device 12 receives a main-recording start command which is inputted by the user. The main-recording start command is a command to start the main recording of the recording apparatus 1. For example, when the user presses the recording-start button on an operation panel disposed on the recording apparatus 1, the main-recording start command is issued. The command receiving device 12 receives it.

The first recording device 13 is provided with a memory element or recording medium. The first recording device 13 is used for the constant recording. The first recording device 13 records a predetermined amount of content data, under the control of the constant recording control device 15. The memory element or recording medium of the first recording device 13 is a rewritable memory element or recording medium. Moreover, the memory element or recording medium of the first recording device 13 may be nonvolatile or volatile. The first recording device 13 desirably does not have a moving part. For example, the first recording device 13 is desirably a solid-state memory. In the solid-state memory, a semiconductor memory such as a RAM is spread and easily available. Thus, the first recording device 13 is desirably a semiconductor memory. Incidentally the first recording device 13 may have a moving part, and it may be e.g. a hard disk drive (including a magnetic disk) or an optical disc drive (including an optical disc). The first recording device 13, however, would rather not have the moving part than have it. Due to the structure without the moving part, it is possible to attain suppression of the power consumption by the constant recording or a reduction in failure, more effectively. The memory element or recording medium of the first recording device 13 only needs to have a recording capacity large enough to record the predetermined amount of content data in the constant recording. The recording apparatus 1 records the content data (e.g. MPEG-2 TS video data) with an amount corresponding to a reproduction time of about 30 minutes, in the constant recording. Therefore, the memory element or recording medium of the first recording device 13 has a recording capacity of about dozen Giga Bytes. Incidentally, if the content data is recorded with an amount corresponding to a reproduction time of about 15 minutes in the constant recording, the memory element or recording medium of the first recording device 13 may have a recording capacity of about 5 or 6 Giga Bytes. Moreover, if the content data is recorded with an amount corresponding to a reproduction time of about 5 minutes in the constant recording, the memory element or recording medium of the first recording device 13 may have a recording capacity of about 1 or 2 Giga Bytes. Moreover, if the content data has a high compression rate or if the content data is only audio data, the data amount per unit time is small. In such a case, the memory element or recording medium of the first recording device 13 can be made small.

The second recording device 14 is provided with a memory element or recording medium. The second recording device 14 is mainly used for the main recording. The second recording device 14 records and holds the content data in accordance with the main recording control device 17. Moreover, the memory element or recording medium of the second recording device 14 is desirably nonvolatile but can be volatile. The memory element or recording medium of the second recording device 14 desirably has a large recording capacity. The second recording device 14 is desirably a hard disk drive (including a magnetic disk). Incidentally, the second recording device 14 may be an optical disc drive (including an optical disc). If the second recording device 14 is a hard disk drive or an optical disc drive, the second recording device 14 has a moving part. The moving part is, for example, a motor for driving a disk, an arm for reciprocating or rotating, a head mounted on an arm, or the like.

The second recording device 14 is provided separately from and independently of the first recording device 13. For example, even while the first recording device 13 is operating, the moving part of the second recording device 14 can be out of operation. More specifically, the first recording device 13 and the second recording device 14 desirably have independent lines for supplying an electric power to an electric source. Moreover, it is desirable to stop the power supply to the electric source of the second recording device 14 or stop the power supply to the electric source of the moving part of the second recording device 14 while an electric power is supplied to the power supply of the first recording device 13.

The constant recording control device 15 controls the recording operation of the first recording device 13 in the constant recording. The constant recording control device 15 keeps recording, while updating, the predetermine amount of content data, which is received by the content data receiving device 11 before the main-recording start command is received by the command receiving device 12, onto the first recording device 13.

That is, the constant recording control device 15 records the content data onto the first recording device 13 before the main-recording start command is received by the command receiving device 12. The constant recording control device 15, for example, starts to record the content data onto the first recording device 13 before the user presses the recording-start button. More specifically, the constant recording control device 15 desirably starts to record the content data onto the first recording device 13 when the recording apparatus 1 is powered on.

Moreover, the constant recording control device 15 records the predetermined amount of content data onto the first recording device 13. For example, the constant recording control device 15 records the content data with an amount corresponding to a reproduction time of 30 minutes or less, onto the first recording device 13. If MPEG-2TS video data is recorded with an amount corresponding to a reproduction time of about 30 minutes, the constant recording control device 15 records 10 or 11 Giga Byte content data onto the first recording device 13. Moreover, if MPEG-2TS video data is recorded with an amount corresponding to a reproduction time of about 15 minutes, the constant recording control device 15 records 5 or 6 Giga Byte content data onto the first recording device 13. Moreover, if MPEG-2TS video data is recorded with an amount corresponding to a reproduction time of about 5 minutes, the constant recording control device 15 records 1 or 2 Giga Byte content data onto the first recording device 13. Incidentally, the constant recording control device 15 may record the content data with an amount corresponding to a reproduction time of 30 minutes or more, onto the first recording device 13. However, if the amount of the content data which is recorded by the constant recording control device 15 onto the first recording device 13 is excessively increased, the recording capacity of the first recording device 13 also has to be increased. As a result, a large-scaled recording apparatus with the moving part has to be used as the first recording device 13. In contrast, if the amount of the content data which is recorded by the constant recording control device 15 onto the first recording device 13 is reduced, the recording capacity of the first recording device 13 can be reduced. As a result, a small-scaled recording apparatus without the moving part can be used as the first recording device 13. By this, it is possible to attain suppression of the power consumption by the constant recording or a reduction in failure, effectively.

[ Moreover, the constant recording control device 15 always keeps recording, while updating, the content data, which is received by the content data receiving device 11, onto the first recording device 13. If the transmission source is a television broadcast station, the content data receiving device 11 is transmitted one after another and in continuity, from the broadcast station. The constant recording control device 15 always keeps recording the content data onto the first recording device 13. As described above, the memory element or recording medium of the first recording device 13 only has a small recording capacity, which is enough to record the content data with an amount corresponding to a reproduction time of about 30 minutes. Thus, the constant recording control device 15 records the content data, while updating it, onto the first recording device 13. For example, the constant recording control device 15 records the content data onto the first recording device 13 by a ring buffer method. That is, the constant recording control device 15 sequentially records the content data from an area indicated by a head address to an area indicated by a tail address in the recording area of the memory element or recording medium of the first recording device 13. When recording the content data into the area indicated by the tail address, the constant recording control device 15 goes back to the head address again, and overwrites the content data from the area indicated by the head address to the area indicated by the tail address.

The constant recording control device 15 can be realized by e.g. an arithmetic processing circuit, a semiconductor memory, or the like. Moreover, the constant recording control device 15 is provided with: a confirming device 21; a transferring device 22; and a first time point information generating device 23, as shown in FIG. 1. The confirming device 21 confirms the recording start of the second recording device 14. The transferring device 22 transfers the content data which is recorded and held at a time point at which the recording start of the second recording device is confirmed by the confirming device 21, to the second recording device 14. The first time point information generating device 23 generates first time point information which indicates a time point at which the predetermined amount of content data is recorded onto the first recording device 13, and records it onto the first recording device 13. The confirming device 21, the transferring device 22, and the first time point information generating device 23 will be further described later.

The operation control device 16 controls the operation of the second recording device 14. The operation control device 16 keeps the second receiving device 14 out-of-operation before the main-recording start command is received by the command receiving device 12 and starts the operation of the second receiving device 14 after the main-recording start command is received by the command receiving device 12. If the second receiving device 14 has a moving part, the operation control device 16 desirably keeps the moving part of the second receiving device 14 out-of-operation before the main-recording start command is received by the command receiving device 12 and desirably starts the operation of the moving part of the second receiving device 14 after the main-recording start command is received by the command receiving device 12. For example, even if the recording apparatus 1 is powered on, before the main-recording start command is received, the operation control device 16 maintains the state that the power supply to the electric source of the second recording device 14 or the power supply to the electric source of the moving part of the second recording device 14 is stopped (e.g. a sleep state). After the main-recording start command is received, the operation control device 16 starts the power supply to the electric source of the second recording device 14 or the power supply to the electric source of the moving part of the second recording device 14. This is explained more specifically. If the second receiving device 14 is a hard disk drive, before the main-recording start command is received, the operation control device 16 maintains the state that the rotation of a disc in the hard disk drive is stopped. After the main-recording start command is received, the operation control device 16 starts to rotate the disk in the hard disk drive. The operation control device 16 can be realized by e.g. an arithmetic processing circuit, a semiconductor memory, or the like.

The main recording control device 17 controls the recording operation of the second recording device 14 in the main recording. The main recording control device 17 records the content data which is received by the content data receiving device 11, onto the second receiving device 14 after the second receiving device 14 starts the operation by the operation control device 16. The main recording control device 17, as in the constant recording control device 15, performs the control to record the content data which is received by the content data receiving device 11. Although the constant recording control device 15 always keeps recording the content data before the main-recording start command is received by the command receiving device 12, the main recording control device 17 records the content data after the main-recording start command is received by the command receiving device 12. Moreover, although the amount of the content data recorded by the constant recording control device 15 is the predetermined amount (e.g. an amount corresponding to a reproduction time of 30 minutes), the amount of the content data recorded by the main recording control device 17 is not limited as long as there is a space area on the memory element or recording medium of the second recording device 14 (which desirably has a large capacity as described above). Thus, although the constant recording control device 15 needs to record the content data while updating it, the main recording control device 17 does not have to update the content data as long as there is a space area on the memory element or recording medium of the second recording device 14.

The main recording control device 17 can be realized by e.g. an arithmetic processing circuit, a semiconductor memory, or the like. Moreover, the main recording control device 17 can be provided with a second time point information generating device 24. The second time point information generating device 24 generates second time point information which indicates a time point at which the content data starts to be recorded onto the second recording device 14, and records it onto the second recording device 14. The second time point information generating device 24 will be further described later.

The combining device 18 mutually combines (or merges) the content data which is recorded and held on the first recording device 13 at the time point at which the content data received by the content receiving device 11 starts to be recorded onto the second recording device 14 with the content data which is recorded and held on the second recording device 14 by the main recording. That is, one of the combining targets of the combining device 18 is the content data which is recorded and held on the first recording device 13 at the time point at which the content data received by the content receiving device 11 starts to be recorded onto the second recording device 14 (or immediately before or immediately after the time point) (hereinafter referred to as "constant recording content data"). The other is the content data which is recorded and held on the second recording device 14 by the main recording (hereinafter referred to as "main recording content data"). The combining device 18 combines the two such that the constant recording content data and the main recording content data make one content data which is continuous in terms of the content. The combining device 18 uses a recording area of the second recording device 14 as an operation area to perform the process of combining those content data. Incidentally, as the operation area to perform the process of combining those content data, another memory element or recording medium may be prepared.

The combining device 18 can be realized by an arithmetic processing circuit, a memory element or recording medium which provides the operation area to perform the combining process, or the like. The combining device 18 is provided with a merging time point detecting device 25. The merging time point detecting device 25 refers to the first time point information and the second time point information, to thereby detect a merging time point at which the first time point information and the second time point information are merged. The combining process of the combining device 18 and the operation of the merging time point detecting device 25 will be described later.

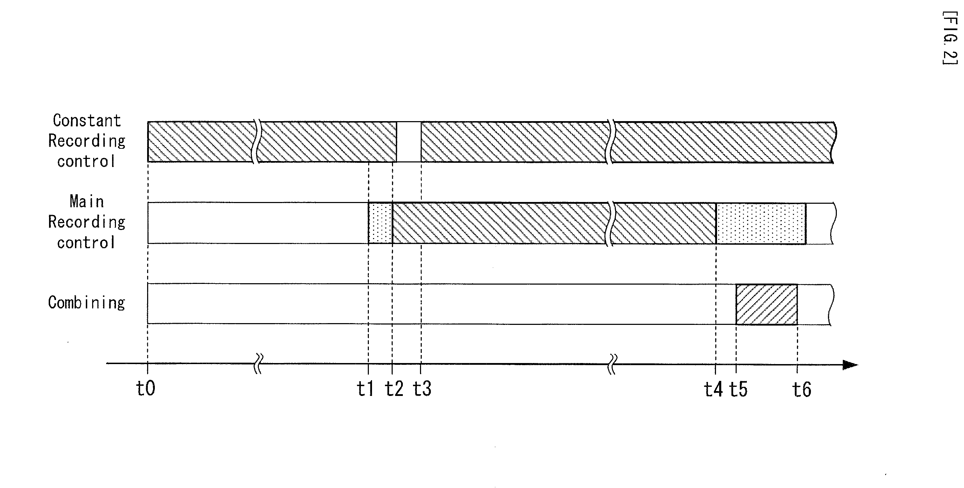

FIG. 2 shows one example of the operation of the recording apparatus 1. An oblique-line portion in FIG. 2 indicates that the constant recording control, the main recording control, and the combining process are all in operation. Firstly, in order to operate the recording apparatus 1, a user connects a television broadcast reception antenna or the like to the recording apparatus 1. Incidentally, if the recording apparatus 1 is not equipped with the selecting device 19, the user connects a tuner with an antenna connected, to the receiving apparatus 1. Then, at a time point t0 in FIG. 2, the user powers on the recording apparatus 1. This starts the power supply to each of the constituent elements of the recording apparatus 1. The operation control device 16, however, maintains the state that the power supply to the electric source of the second recording device 14 or the moving part of the second recording device 14 is cut off. Thus, the second recording device 14 or the moving part of the second recording device 14 is stopped. For example, if the second recording device 14 is a hard disk drive, the rotation of a disk is stopped.

Then, the user selects the content data about a desired program with the selecting device 19 (or a tuner if the recording apparatus 1 is not equipped with the selecting device 19). The content data receiving device 11 receives the selected content data. Then, the constant recording control device 15 keeps recording, while updating, the predetermined amount of content data which is received by the content data receiving device 11, onto the first recording device 13. As described above, almost simultaneously with the power-on of the recording apparatus 1, the constant recording is performed.

At a time point t1, if the user presses the recording-start button of the recording apparatus 1, the main-recording start command is issued in response to this. The main-recording start command is received by the command receiving device 12. When the main-recording start command is received by the command receiving device 12, the operation control device 16 starts the power supply to the electric source of the second recording device 14 or the moving part of the second recording device 14, to thereby operate the second recording device 14 or the moving part of the second recording device 14. For example, if the second recording device 14 is a hard disk drive, the operation control device 16 starts to rotate a disk in the hard disk drive. The second recording device 14 which has started the operation performs a preparation operation between the time point t1 and a time point t2.

At the time point t2, the main recording control device 17 starts to record the content data onto the second recording device 14. At this time, the confirming device 22 confirms the recording start of the second recording device 14. After the recording start of the second recording device 14 is confirmed by the confirming device 22, the constant recording control device 15 temporarily stops recording the content data onto the first recording device 13. Then, the transferring device 22 transfers the content data which is recorded and held on the first recording device 13 at the time point at which the recording start of the second recording device 14 is confirmed (or the constant recording content data), to the second recording device 14 (or the operation area in the combining process by the combining device 18).

At a time point t3, the transferring device 22 completes the transfer of the constant recording content data from the first recording device 13 to the second recording device 14. Then, the constant recording control device 15 starts to record the content data which is received from the content data receiving device 11, again, onto the first recording device 13. As a result, between the time point t3 and a time point t4, the same content data is recorded on the first recording device 13 and the second recording device 14.

At the time point t4, if the user presses a recording-stop button, a main-recording stop command is issued in response to this. The main-recording stop command is received by the command receiving device 12. When the main-recording stop command is received by the command receiving device 12, the main recording control device 17 stops recording the content data onto the second recording device 14. At this time point, the constant recording content data and the main recording content data are recorded and held on the second recording device 14. This is repeatedly described, but the constant recording content data is the content data which is recorded and held at the time point at which the content data received by the content data receiving device 11 starts to be recorded onto the second recording device 14. Moreover, the main recording content data is the content data which is recorded and held on the second recording device 14 by the main recording.

At a time point t5, the combining device 18 mutually combines the constant recording content data and the main recording content data which are recorded and held on the second recording device 14. By this, the content data which is recorded onto the first recording device 13, for example, for about 30 minutes (or about 15 minutes, about 5 minutes, or 30 minutes or more) before the main-recording start command is received is added to the head portion of the content data which is recorded on the second recording device 14 after the main-recording start command is received. Then, the content data combined by the combining device 18 is stored into e.g. a storage area of the memory element or recording medium of the second recording device 14. This allows the user to continuously reproduce the content data about a desired program which is broadcasted, for example, for about 30 minutes before the recording button is pressed, and the content data about the same program which is broadcasted after the recording button is pressed.

At a time point t6, when the combining process by the combining device 18 is ended, the operation control device 16 stops the power supply to the electric source of the second recording device 14 or the moving part of the second recording device 14. By this, for example, if the second recording device 14 is a hard disk drive, the rotation of a disk in the hard disk drive is stopped. Incidentally, even at this time point, the constant recording control device 15 keeps recording, while updating, the content data which is received by the content data receiving device 11, onto the first recording device 13.

Incidentally, the aforementioned explanation using FIG. 2 exemplifies the case that the constant recording content data is transferred by the transferring device 22 to the second recording device 14 immediately after the recording start of the second recording device 14 is confirmed by the confirming device 21. However, the constant recording content data may be transferred anytime as long as between when the recording start of the second recording device 14 is confirmed and when the combining process by the combining device 18 is started.

Moreover, the aforementioned explanation using FIG. 2 exemplifies the case that the combining process by the combining device 18 is performed immediately after the main recording is ended (i.e. time point t5). The combining process, however, may be performed anytime. For example, the combining process can be performed after the main recording is started and a portion to be the combining point of the content data is recorded onto the second recording device 14. Moreover, as described later, the combing point is detected in the combining process. The combining point can be detected even before the constant recording content data is transferred from the first recording device 13 to the second recording device 14.

As explained above, the recording apparatus 1 is provided with the first recording device 13 and the second recording device 14, which are separated from and independent of each other. The first recording device 13 is in charge of the constant recording of the content data, while the second recording device 14 is kept out-of-operation as long as the main-recording start button is not issued. By this, it is unnecessary to provide a large-scaled recording apparatus to perform the constant recording, and it is possible to eliminate a large-scaled cooling structure. As a result, it is possible to reduce the apparatus scale while the content data which is received before the recording-start command is inputted by the user is recorded and held.

In particular, it is possible to reduce the capacity of the first recording device 13 by controlling the amount of the content data which is recorded onto the first recording device 13 in charge of the constant recording, to the predetermined amount corresponding to a reproduction time of e.g. about 30 minutes. Therefore, it is possible to further reduce the apparatus scale.

Moreover, since the capacity of the first recording device 13 can be reduced, a recording apparatus which consumes little electricity, for example, the solid-state memory, such as a semiconductor memory, can be used as the first recording device 13. Therefore, it is possible to reduce the power consumption while the content data which is received before the recording-start command is inputted by the user is recorded and held.

Moreover, since the solid-state memory, such as a semiconductor memory, can be used as the first recording device 13, the moving part can be eliminated from the first recording device 13. Therefore, it is possible to reduce the prospect of the failure while the content data which is received before the recording-start command is inputted by the user is recorded and held.

### (Process of Combining Content Data)

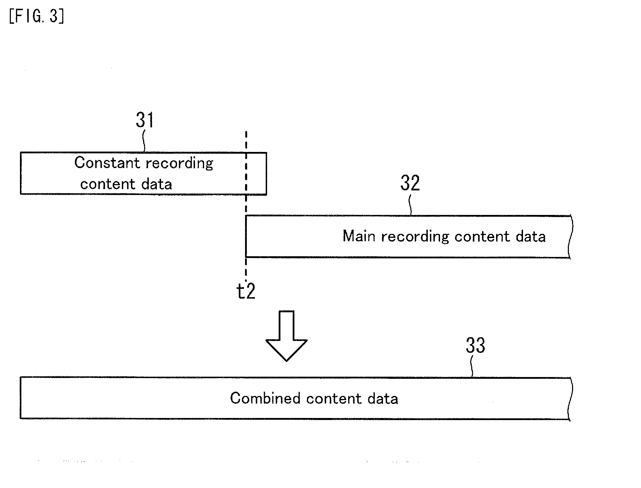

FIG. 3 shows the combining process of the combining device 18 on the recording apparatus 1. The recording apparatus 1 employs a method of performing the process of combining the content data on the basis of the time point at which the content data is recorded onto the first recording device 13 and the second recording device 14.

That is, when the constant recording control device 15 records the content data which is received by the content data receiving device 11, onto the first recording device 13 in the constant recording, the first time point information generating device 23 (refer to FIG. 1) generates a plurality of first time point information which indicates the time point at which the content data is recorded onto the first recording device 13, and records it onto the first recording device 13. At this time, the first time point information generating device 23 associates the positions of the content data with the respective first time point information so as to detect which position of the content data is recorded onto the first recording device 13 at what time in the combining process. Moreover, the first time point information generating device 23 generates the first time point information every predetermined time (e.g. 0.1 second) between when the main-recording start command is received by the command receiving device 12 (i.e. the time point t1 in FIG. 2) and when the constant recording control device 14 temporarily stops recording the content data onto the first recording device 13 after the recording start of the second recording device 14 is confirmed by the confirming device 22 (i.e. any time point between the time points t2 to t3 in FIG. 2), and the first time point information generating device 23 sequentially records it onto the first recording device 13. Moreover, when the content data is transferred by the transferring device 22 from the first recording device 13 to the second recording device 14, the first time point information is transferred with the content data from the first recording device 13 to the second recording device 14.

On the other hand, when the main recording control device 17 starts to record the content data which is received by the content data receiving device 11, onto the second recording device 14, the second time point information generating device 24 generates one second time point information which indicates the time point at which the content data starts to be recorded onto the second recording device 14, and records it onto the second recording device 14.

Then, when the combining process is started by the combining device 18, the merging time point detecting device 25 (refer to FIG. 1) refers to the first time point information and the second time point information, to thereby detect the merging time point at which the first time point information and the second time point information are merged. According to the example in FIG. 2 described above, the merging time point is the time point t2. Therefore, as shown in FIG. 3, the combining device 18 regards a position corresponding to the merging time point t2 in constant recording content data 31 and a position corresponding to the merging time point t2 in constant recording content data 32 (i.e. the head position of the content data which is recorded onto the second recording device 14 by the main recording control device 17) as the combining point, and mutually combines these content data to generate one content data 33 which is continuous in terms of the content.

As explained above, the combining process which uses the time point allows the content data to be combined highly accurately.

Incidentally, the recording apparatus 1 employs the method based on the merging time point as the method of combining the content data by the combining device 18. However, it can also employ another combining method. Hereinafter, a combining method using image analysis and a combining method using sound analysis will be described.

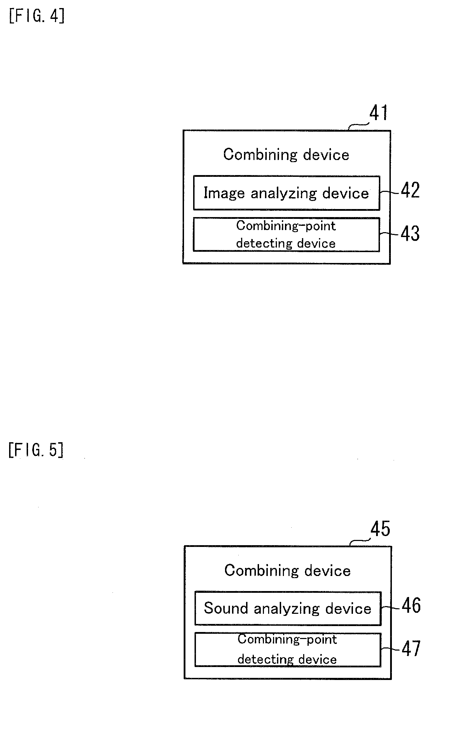

FIG. 4 shows the structure of a combining device if it employs the combining method using the image analysis. If this combining method is used, a combining device 41 in FIG. 4 is provided instead of the combining device 18 in FIG. 1. Then, the first time point information generating device 23 and the second time point information generating device 24 in FIG. 1 are eliminated. As shown in FIG. 4, the combining device 41 is provided with: an image analyzing device 42; and a combining-point detecting device 43. The image analyzing device 42 analyzes the image of the content data. The combining-point detecting device 43 detects the combining point of the constant recording content data and the main recording content data, on the basis of the analysis of the image analyzing device 42. The combining device 41 mutually combines the constant recording content data and the main recording content data, at the combining point detected by the combining-point detecting device 43. The image analysis can be performed on the basis of brightness information included in the content data, an image change in a scene change of the content data, PID (packet identifier) of a MPEG image, or the like.

FIG. 5 shows the structure of a combining device if it employs the combining method using the sound analysis. If this combining method is used, a combining device 45 in FIG. 5 is provided instead of the combining device 18 in FIG. 1. Then, the first time point information generating device 23 and the second time point information generating device 24 in FIG. 1 are eliminated. As shown in FIG. 5, the combining device 45 is provided with: a sound analyzing device 46; and a combining-point detecting device 47. The sound analyzing device 46 analyzes the sound of the content data. The combining-point detecting device 47 detects the combining point of the constant recording content data and the main recording content data, on the basis of the analysis of the sound analyzing device 46. The combining device 45 mutually combines the constant recording content data and the main recording content data, at the combining point detected by the combining-point detecting device 47. The sound analysis is performed on the basis of a change from a mono sound to a stereo sound in the audio data of the content data.

Incidentally, if the content data is MPEG video data or audio data, time information for reproducing the video data or the audio data is included in the content data in advance. The content data can be also combined by using the time information to detect the combining point of the content data.

### (Second Embodiment of Recording Apparatus)

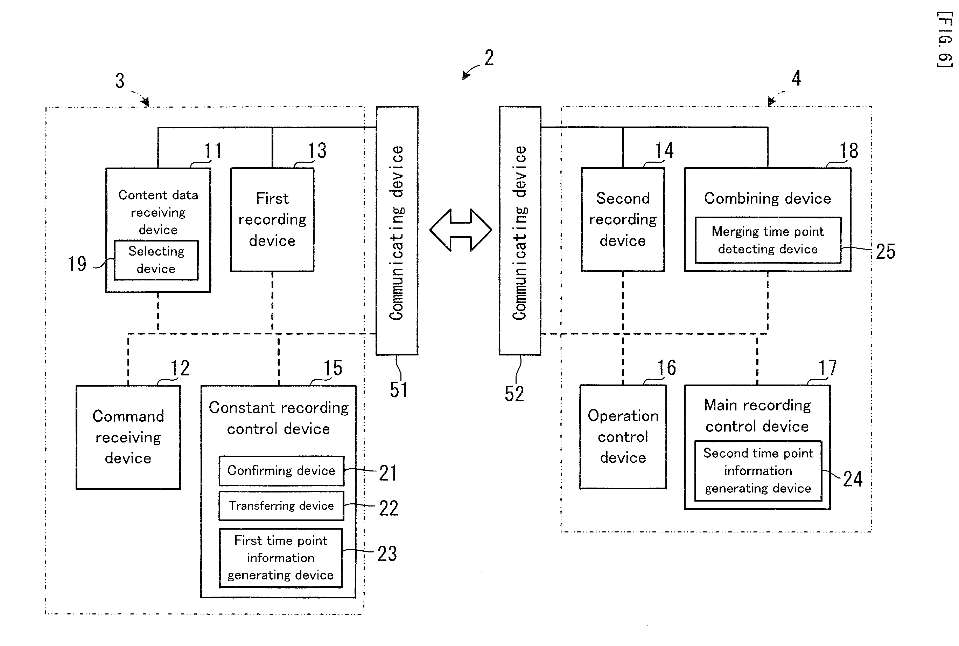

FIG. 6 shows a second embodiment of the recording apparatus of the present invention. In FIG. 6, a recording apparatus 2 is provided with: a content data receiving device 11; a command receiving device 12; a first recording device 13; a constant recording control device 15; a second recording device 14; an operation control device 16; a main recording control device 17; and a combining device 18, as in the recording apparatus 1. In the recording apparatus 2, however, these devices are divided into a first section 3 and a second section 4. The first section 3 is provided with: the content data receiving device 11; the command receiving device 12; the first recording device 13; and the constant recording control device 15. The second section 4 is provided with: the second recording device 14; the operation control device 16; the main recording control device 17; and the combining device 18. The first section 3 and the second section 4 are connected to each other by a network. The network is a computer network, such as Ethernet (trademark), LAN (Local-Area Network), and WAN (Wide-Area Network). Moreover, the first section 3 and the second section 4 are provided with communicating devices 51 and 52, respectively, and the communicating devices 51 and 52 control a communication between the first section 3 and the second section 4.

The operation of the recording device 2 is as follows. A user connects a television broadcast reception antenna or the like to an antenna input terminal of the first section 3, and powers on each of the first section 3 and the second section 4. This starts a power supply to each of the constituent elements of the first section 3 and the second section 4. The operation control device 16, however, maintains the state that the power supply to the electric source of the second recording device 14 or the moving part of the second recording device 14 is cut off. Then, the user selects the content data about a desired program with the selecting device 19. The content data receiving device 11 receives the selected content data. Then, the constant recording control device 15 keeps recording, while updating, a predetermined amount of content data which is received by the content data receiving device 11, onto the first recording device 13.

Then, if the user presses a recording-start button disposed on the first section 3, a main-recording start command is issued in response to this. The main-recording start command is received by the command receiving device 12. Moreover, the main-recording start command received by the command receiving device 12 is transmitted to the second section 4 through the communicating device 51 of the first section 3 and the network. The communicating device 52 of the second section 4 receives the main-recording start command. When the main-recording start command is received by the communicating device 52, the operation control device 16 starts the power supply to the electric source of the second recording device 14 or the moving part of the second recording device 14, to thereby operate the second recording device 14 or the moving part of the second recording device 14. The second recording device 14 prepares to record the content data.

If the preparation for the recording of the second recording device 14 is completed, the communicating device 52 of the second section 4 transmits a main-recording-preparation completion notice which indicates that the preparation for the main recording is completed, to the first section 3. The communicating device 51 of the first section 3 receives the main-recording-preparation completion notice. When the main-recording-preparation completion notice is received by the communicating device 51, the communicating device 51 of the first section 3 transmits the content data which is received by the content data receiving device 11, to the second section 4. The communicating device 52 of the second section 4 receives the content data. Then, the main recording control device 17 starts to record the content data which is received by the communicating device 52, onto the second recording device 14. Then, the reception of the content data by the content data receiving device 11, the transmission of the content data from the first section 3 to the second section 4, the reception of the content data by the communicating device 52, and the recording of the content data onto the second recording device 14 by the main recording control device 17 are continuously performed as long as the recording by the main recording control device 17 continues.

When the recording by the main recording control device 17 is started, the communicating device 52 of the second section 4 transmits a main-recording start notice which indicates that the content data starts to be recorded onto the second recording device 14, to the first section 3. The communicating device 51 of the first section 3 receives the main-recording start notice. Then, the confirming device 22 confirms the recording start of the second recording device 14 on the basis of the main-recording start notice. After that, the constant recording control device 15 temporarily stops recording the content data onto the first recording device 13. Then, the transferring device 22 transfers the content data which is recorded and held on the first recording device 13 at the time point at which the recording start of the second recording device 14 is confirmed (i.e. the constant recording content data), to the second section 4. The communicating device 52 of the second section 4 receives the constant recording content data and transfers it to the second recording device 14. Incidentally, if the constant recording content data cannot be transmitted only once from the first section 3 to the second section 4, the process of transmitting the constant recording content data is performed several times.

If the transfer of the constant recording content data to the second recording device 14 is completed, the communicating device 52 transmits a transfer completion notice to the first section 3. Then, the communicating device 51 of the first section 3 receives the transfer completion notice. Then, the constant recording control device 15 restarts to record the content data which is received by the content data receiving device 11, onto the first recording device 13.

Then, if the user presses a recording-stop button, a main-recording stop command is issued in response to this. The main-recording stop command is received by the command receiving device 12, transmitted to the second section 4 through the communicating device 51 and the network, and received by the communicating device 52 of the second section 4. When the main-recording stop command is received by the communicating device 52, the main recording control device 17 stops recording the content data onto the second recording device 14. After that, the combining device 18 mutually combines the constant recording content data and the main recording content data which are transferred to the second recording device 14. When the combining process by the combining device 18 is ended, the operation control device 16 stops the power supply to the electric source of the second recording device 14 or the moving part of the second recording device 14.

As explained above, according to the recording apparatus 2, as in the recording apparatus 1, it is possible to reduce the apparatus scale, the power consumption, and the prospect of the failure while the content data which is received before the recording-start command is inputted by the user is recorded and held.

### (Embodiment of Recording System)

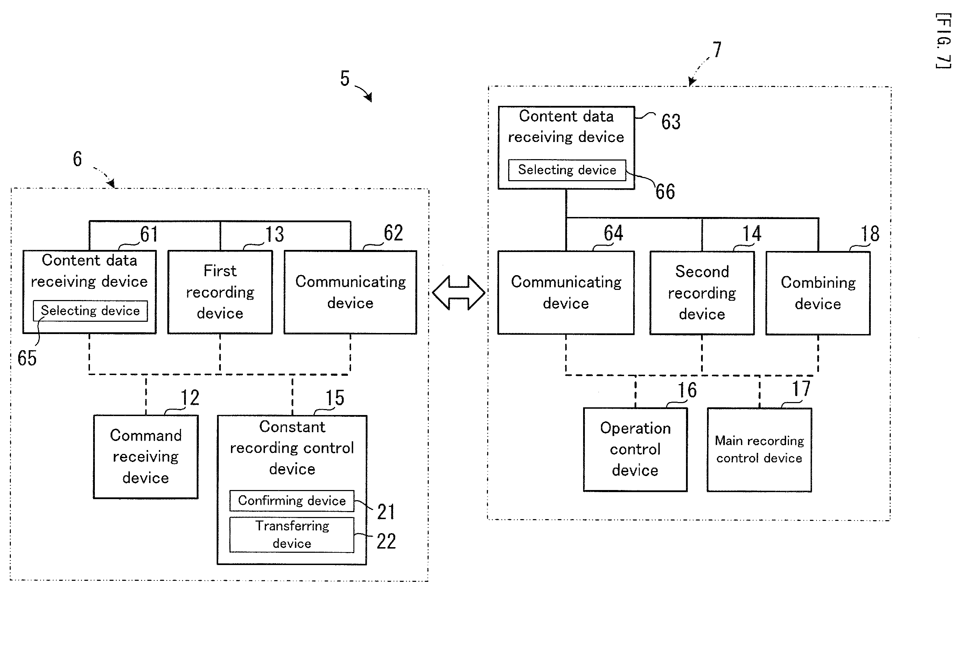

FIG. 7 shows an embodiment of the recording system of the present invention. In FIG. 7, a recording system 5 is provided with: a first recording apparatus 6; and a second recording apparatus 7. The first recording apparatus 6 and the second recording apparatus 7 are connected to each other through a network. The first recording apparatus 6 is mounted on e.g. a television provided with a display apparatus. The second recording apparatus 7 is, for example, a tuner and hard disk drive built-in type recorder. The network is a computer network, such as LAN and WAN.

The first recording apparatus 6 is provided with: a content data receiving device 61; a command receiving device 12; a first recording device 13; a constant recording control device 15; and a communicating device 62. The content data receiving device 61 receives the content data which is transmitted from e.g. a television broadcast station, as in the content data receiving device 11 of the recording apparatus 1. The command receiving device 12, the first recording device 13, and the constant recording control device 15 are also the same as those of the recording apparatus 1. The communicating device 62 controls a communication between the first recording apparatus 6 and the second recording apparatus 7. Moreover, a selecting device 65 which is mounted on the content data receiving device 61 is also the same as the selecting device 19 of the recording apparatus 1.

The second recording apparatus 7 is provided with: a content data receiving device 63; a communicating device 54; a second recording device 14; an operation control device 16; a main recording control device 17; and a combining device 18. The content data receiving device 63 receives the content data which is transmitted from e.g. a television broadcast station, as in the content data receiving device 61 of the first recording apparatus 6. The communicating device 64 controls a communication between the first recording apparatus 6 and the second recording apparatus 7. The operation control device 16, the main recording control device 17, and the combining device 18 are the same as those of the recording apparatus 1 Moreover, a selecting device 66 which is mounted on the content data receiving device 63 is also the same as the selecting device 19 of the recording apparatus 1.

The operation of the recording system 5 is as follows. A user connects a television broadcast reception antenna or the like to each of the first recording apparatus 6 and the second recording apparatus 7. Then, the user powers on each of the first recording apparatus 6 and the second recording apparatus 7. This starts a power supply to each of the constituent elements of the first recording apparatus 6 and the second recording apparatus 7. The operation control device 16 of the second recording apparatus 7, however, maintains the state that the power supply to the electric source of the second recording device 14 or the moving part of the second recording device 14 is cut off. Then, the user selects the content data about a desired program with the selecting device 65. The content data receiving device 61 receives the selected content data. Then, the constant recording control device 15 keeps recording, while updating, a predetermined amount of content data which is received by the content data receiving device 61, onto the first recording device 13.

Then, if the user presses a recording-start button disposed on the first recording apparatus 6, a main-recording start command is issued in response to this. The main-recording start command is received by the command receiving device 12. Moreover, the main-recording start command received by the command receiving device 12 is transmitted to the second recording apparatus 7 through the communicating device 62 of the first recording apparatus 6 and the network. At this time, information which indicates a channel or program which is now selected by the content data receiving device 61 (hereinafter referred to as "program selection information") is transmitted with the main-recording start command to the second recording apparatus 7 The communicating device 64 of the second recording apparatus 7 receives the main-recording start command. When the main-recording start command is received by the communicating device 64, the content data receiving device 63 selects the same channel as the channel or program which is now selected by the content data receiving device 61, on the basis of the program selection information. Then, the operation control device 16 starts the power supply to the electric source of the second recording device 14 or the moving part of the second recording device 14, to thereby operate the second recording device 14 or the moving part of the second recording device 14. Then, the main recording control device 17 starts to record the content data which is received by the content data receiving device 63, onto the second recording device 14. In response to this, the communicating device 64 transmits a main-recording start notice which indicates that the content data starts to be recorded onto the second recording device 14, to the first recording apparatus 6. The communicating device 62 of the first recording apparatus 6 receives the main-recording start notice. Then, the confirming device 22 confirms the recording start of the second recording device 14 on the basis of the main-recording start notice. After that, the constant recording control device 15 temporarily stops recording the content data onto the first recording device 13. Then, the transferring device 22 transfers the content data which is recorded and held on the first recording device 13 at the time point at which the recording start of the second recording device 14 is confirmed (i.e. the constant recording content data), to the second recording apparatus 7. The communicating device 64 of the second recording apparatus 7 receives the constant recording content data and transfers it to the second recording device 14. Incidentally, if the constant recording content data cannot be transmitted only once from the first recording apparatus 6 to the second recording apparatus 7, the process of transmitting the constant recording content data is performed several times.

If the transfer of the constant recording content data to the second recording device 14 is completed, the communicating device 64 transmits a transfer completion notice to the first recording apparatus 6. Then, the communicating device 62 of the first recording apparatus 6 receives the transfer completion notice. Then, the constant recording control device 15 restarts to record the content data which is received by the content data receiving device 61, onto the first recording device 13.

Then, if the user presses a recording-stop button, a main-recording stop command is issued in response to this. The main-recording stop command is received by the command receiving device 12, transmitted to the second recording apparatus 7 through the communicating device 62 and the network, and received by the communicating device 64 of the second recording apparatus 7. When the main-recording stop command is received by the communicating device 64, the main recording control device 17 stops recording the content data onto the second recording device 14. After that, the combining device 18 mutually combines the constant recording content data and the main recording content data which are transferred to the second recording device 14. When the combining process by the combining device 18 is ended, the operation control device 16 stops the power supply to the electric source of the second recording device 14 or the moving part of the second recording device 14.

As explained above, according to the recording system 5, as in the recording apparatus 1, it is possible to reduce the apparatus scale, the power consumption, and the prospect of the failure while the content data which is received before the recording-start command is inputted by the user is recorded and held.

Incidentally, the content data receiving apparatus 61 is a specific example of the first content data receiving device, and the command receiving device 12 is a specific example of the first command receiving device. Moreover, the communicating device 62 is a specific example of the command transmitting device, the notice receiving device, and the content data transmitting device. The content data receiving device 63 is a specific example of the third content data receiving device. Moreover, the communicating device 64 is a specific example of the second content receiving device and the notice transmitting device.

### (Transmitting Method)

The aforementioned embodiment, such as the recording apparatus 1, is also an embodiment of the content-data recording method of the present invention. That is, recording the content data onto the first recording device 13 at the time points t0 to t1 in FIG. 2 is a specific example of the constant recording process. Receiving the main-recording start command at the time point t1 is a specific example of the command receiving process. Starting to operate the second recording device 14 at the time point t1 is a specific example of the operating process. Recording the content data onto the second recording device 14 at the time points t1 to t4 is a specific example of the main recording process. Combining the content data at the time points t5 to t6 is a specific example of the combining process.

### (Computer Program)

The recording apparatus of the present invention can be also realized by preparing a control program for realizing the content data receiving device 11, the command receiving device 12, the constant recording control device 15, the operation control device 16, the main recording control device 17;, and the combining device 18 or the like and by making a computer read the control program. At this time, a semiconductor memory and a hard disk drive, which are provided for the computer as standard equipment, function as the first recording device 13 and the second recording device 14, respectively.

### Example

Hereinafter, an example of the present invention will be explained with reference to a drawing. The example below is an example in which the recording apparatus of the present invention is applied to a tuner and hard disk drive built-in type recorder, and it is a preferable example to carry out the present invention.

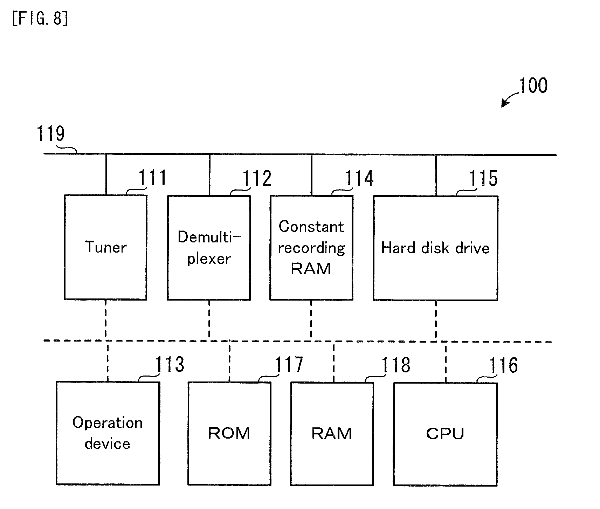

FIG. 8 shows an example of the recording apparatus of the present invention. A digital television broadcast reception antenna is connected to a tuner 111 of a recording apparatus 100 in FIG. 8. A user powers on the recording apparatus 100. This starts a power supply to the electric source of each part of the recording apparatus 100. A CPU 116, however, performs the control that an electric power is not supplied to the electric source of a motor for rotating a magnetic disk of a hard disk drive 115. By this, the motor is not driven at this time point and the magnetic disk is still out of operation.

Then, the user operates an operation device 113 of the recording apparatus 100 in order to select a desired program. In response to this, the tuner 111 selects one change the user desires, from among a plurality of channels which are provided by a television broadcast station or stations. A demultiplexer 112 selects one program the user desires (more correctly, a series of programs provided by one television broadcast company), from among a plurality of programs which are multiplexed into the selected one channel. By this, the content data about the program selected by the tuner 111 and the demultiplexer 112 is supplied to a data bus 119. Then, the CPU 116 records the content data onto a constant recording RAM 114. The constant recording RAM 114 is a RAM with a capacity large enough to record the content data with an amount corresponding to a reproduction time of e.g. about 10 minutes. The CPU 116 always keeps recording, while updating, the content data with the amount corresponding to a reproduction time of e.g. about 10 minutes, onto the constant recording RAM 114.

If the user presses a recording-start button disposed on the operation device 113 of the recording apparatus 100, the operation device 113 takes this as a main-recording start command. In response to this, the CPU 116 supplies an electric power to the electric source of the motor for rotating the magnetic disk in the hard disk drive 115. By this, the motor starts to be driven, and the magnetic disk starts to be rotated. Then, the CPU 116 records the content data about the program selected by the tuner 111 and the demultiplexer 112, onto the magnetic disk in the hard disk drive 115. Incidentally, the hard disk drive 115 (or the magnetic disk) has a capacity large enough to record the content data with an amount corresponding to a reproduction time of e.g. several tens hours.

When the content data starts to be recorded onto the hard disk drive 115, the CPU 116 temporarily stops recording the content data onto the constant recording RAM 114. Then, the CPU 116 transfers the content data which is recorded and held on the constant recording RAM 114 at the time point at which the content data starts to be recorded onto the hard disk drive 115 (or constant recording content data), to the hard disk drive 115. After the transfer is completed, the CPU 116 restarts to record the content data about the problem selected by the tuner 11 and the demultiplexer 112, onto the constant recording RAM 114.

Then, if the user presses a recording-stop button disposed on the operation device 113, the operation device 113 takes this as a main-recording stop command. In response to this, the CPU 116 stops recording the content data onto the hard disk drive 115. At this time point, on the magnetic disk in the hard disk drive 115, there area the content data whose recording has been just ended (or main recording content data) and the constant recording content data which is transferred from the constant recording RAM 114. Then, the CPU 116 combines the main recording content data and the constant recording content data, generates one content data which is continuous in terms of the content, and stores it onto the hard disk drive 115.

Incidentally, the tuner 111 and the demultiplexer 112 are a specific example of the content data receiving device and the selecting device. The operation device 113 is a specific example of the command receiving device. The constant recording RAM 114 is a specific example of the first recording device. The hard disk drive 115 is a specific example of the second recording device. The CPU 116 is a specific example of the constant recording control device, the operation control device, and the main recording control device. Moreover, a ROM 117 stores a control program for making the CPU 116 function as the t constant recording control device, the operation control device, and the main recording control device. Moreover, a RAM 118 is used as an operation area when the CPU 116 operates.

Incidentally, in the present invention, various changes may be made without departing from the essence or spirit of the invention which can be read from the claims and the entire specification. A recording apparatus, a recording system, a recording method, and a computer program, which involve such changes, are also intended to be within the technical scope of the present invention.

### Industrial Applicability

The content-data recording apparatus and the content-data recording method according to the present invention can be applied to a recording apparatus for and a recording method of recording content data, which is transmitted from e.g. a television broadcast station or the like, onto a recording medium. Moreover, they can be applied to a recording medium or the like which is mounted on various computer equipment for consumer use or for commercial use, or which can be connected to various computer equipment.

## Claims

1. A recording apparatus comprising:
a content data receiving device for receiving content data;
a command receiving device for receiving a main-recording start command;
a first recording device;
a second recording device which is separated from and independent of said first recording device;
a constant recording control device for keeping recording, while updating, a predetermined amount of content data which is received by said content data receiving device before the main-recording start command is received by said command receiving device, onto said first recording device;
an operation control device for keeping said second recording device out-of-operation before the main-recording start command is received by said command receiving device and for starting an operation of said second recording device after the main-recording start command is received by said command receiving device;
a main recording control device for recording the content data which is received by said content data receiving device, onto said second recording device after the operation of said second recording device is started by said operation control device; and
a combining device for mutually combining the content data which is recorded and held on said first recording device at a time point at which the content data received by said content data receiving device starts to be recorded onto said second recording device or immediately before the time point, and the content data which is recorded on said second recording device.

2. The recording apparatus according to claim 1, wherein said first recording device does not have a moving part.

3. The recording apparatus according to claim 1, wherein said first recording device is a solid-state memory..

4. The recording apparatus according to claim 1, wherein said first recording device is a semiconductor memory.

5. The recording apparatus according to claim 1, wherein said constant recording control device uses a ring buffer method to keep recording, while updating, the predetermined amount of content data onto said first recording device.

6. The recording apparatus according to claim 1, wherein said constant recording control device keeps recording, while updating, the content data with an amount corresponding to a reproduction time of 30 minutes or less, onto said first recording device.

7. The recording apparatus according to claim 1, wherein said constant recording control device keeps recording, while updating, the content data with an amount corresponding to a reproduction time of 15 minutes or less, onto said first recording device.

8. The recording apparatus according to claim 1, wherein said second recording device has a moving part.

9. The recording apparatus according to claim 8, wherein said operation control device keeps the moving part of said second recording device out-of-operation before the main-recording start command is received by said command receiving device and starts an operation of the moving part of said second recording device after the main-recording start command is received by said command receiving device.

10. The recording apparatus according to claim 8, wherein said second recording device is a hard disk drive.

11. The recording apparatus according to claim 1, wherein said constant recording control device comprises:
a confirming device for confirming the recording start of said second recording device; and
a transferring device for transferring the content data which is recorded and held on said first recording device at a time point at which the recording start of said second recording device is confirmed by said confirming device, to said second recording device.

12. The recording apparatus according to claim 1, wherein
said constant recording control device comprises a first time point information generating device for generating first time point information which indicates a time point at which the predetermined amount of content data is recorded onto said first recording device and recording the first time point information onto said first recording device,
said main recording control device comprises a second time point information generating device for generating second time point information which indicates a time point at which the content data starts to be recorded onto said second recording device and recording the second time point information onto said second recording device,
said combining device comprises a merging time point detecting device for referring to the first time point information and the second time point information, to thereby detect a merging time point at which the first time point information and the second time point information are merged, and
said combining device regards a position corresponding to the merging time point in the content data which is recorded by said constant recording control device and a position corresponding to the merging time point in the content data which is recorded by said main recording control device as a combining point, and mutually combines these content data.

13. The recording apparatus according to claim 1, wherein
said combining device comprises:
an image analyzing device for analyzing an image of the content data; and
a combining-point detecting device for detecting a combining point of the content data which is recorded by said constant recording control device and the content data which is recorded by said main recording control device, on the basis of the analysis of said image analyzing device, and
said combining device mutually combines the content data which is recorded by said constant recording control device and the content data which is recorded by said main recording control device, at the combining point detected by the combining-point detecting device.

14. The recording apparatus according to claim 1, wherein
said combining device comprises:
a sound analyzing device for analyzing a sound of the content data; and
a combining-point detecting device for detecting a combining point of the content data which is recorded by said constant recording control device and the content data which is recorded by said main recording control device, on the basis of the analysis of said sound analyzing device, and
said combining device mutually combines the content data which is recorded by said constant recording control device and the content data which is recorded by said main recording control device, at the combining point detected by the combining-point detecting device.

15. The recording apparatus according to claim 1, wherein said content data receiving data comprises a selecting device for selecting the content data about one program, from among the content data about a plurality of programs which are transmitted on a plurality of channels or which are multiplexed into one channel and simultaneously transmitted from a broadcast station.

16. The recording apparatus according to claim 1, comprising: a first section which comprises said content data receiving device, said command receiving device, said first recording device, and said constant recording control device; and a second section which comprises said second recording device, said operation control device, said main recording control device, and said combining device, said first section and said second section being connected to each other by a network.

17. A recording system comprising: a first recording apparatus; and a second recording apparatus, which are connected to each other through a network,
said first recording apparatus comprising:
a first content data receiving device for receiving content data from an external transmission source;
a first command receiving device for receiving a main-recording start command;
a command transmitting device for transmitting the main-recording start command, which is received by said first command receiving device, to said second recording apparatus;
a first recording device;
a constant recording control device for keeping recording, while updating, a predetermined amount of content data which is received by said first content data receiving device before the main-recording start command is received by said first command receiving device, onto said first recording device;
a notice receiving device for receiving a main-recording start notice; and
a content data transmitting device for transmitting the content data which is recorded and held on said first recording device at a time point at which the main-recording start notice is received by said notice receiving device, to said second recording apparatus,
said second recording apparatus comprising:
a second content data receiving device for receiving content data from an external transmission source;
a second command receiving device for receiving a main-recording start command;
a second recording device;
an operation control device for keeping said second recording device out-of-operation before the main-recording start command is received by said second command receiving device and for starting an operation of said second recording device after the main-recording start command is received by said second command receiving device;
a main recording control device for recording the content data which is received by said second content data receiving device, onto said second recording device after the operation of said second recording device is started by said operation control device;
a notice transmitting device for transmitting the main-recording start notice to said first recording apparatus when the content data which is received by said second content data receiving device starts to be recorded onto said second recording device;
a third content data receiving device for receiving the content data which is transmitted from said content data transmitting device; and
a combining device for mutually combining the content data which is received by said third content data receiving device and the content data which is recorded on said second recording device.

18. A content-data recording method on a recording apparatus comprising: a content data receiving device for receiving content data; a first recording device; and a second recording device, said recording method comprising:
a constant recording process of keeping recording, while updating, a predetermined amount of content data which is received by said content data receiving device before a main-recording start command is received, onto said first recording device;
a command receiving process of receiving the main-recording start command;
an operating process of starting an operation of said second recording device after the main-recording start command is received in said command receiving process;
a main recording process of recording the content data which is received by said content data receiving device, onto said second recording device after the operation of said second recording device is started in said operating process; and
a combining process of mutually combining the content data which is recorded and held on said first recording device at a time point at which the content data received by said content data receiving device starts to be recorded onto said second recording device or immediately before the time point, and the content data which is recorded on said second recording device.

19. A computer program making a computer function as the recording apparatus according to claim 1.
